(19) Europäisches Patentamt
European Patent Office
Office européen des brevets

(11) **EP 2 149 013 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **08760077.1**

(22) Anmeldetag: **27.05.2008**

(51) Int Cl.:
*F23C 99/00* (2006.01)     *F23D 14/02* (2006.01)

(86) Internationale Anmeldenummer:
**PCT/EP2008/056479**

(87) Internationale Veröffentlichungsnummer:
**WO 2008/145650 (04.12.2008 Gazette 2008/49)**

(54) **VERFAHREN UND VORRICHTUNG ZUR VERBRENNUNG VON KOHLENWASSERSTOFFHALTIGEN BRENNGASEN**

METHOD AND DEVICE FOR THE COMBUSTION OF HYDROCARBON-CONTAINING GASEOUS FUELS

PROCÉDÉ ET DISPOSITIF DE COMBUSTION POUR COMBUSTIBLES HYDROCARBONÉS GAZEUSES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.05.2007 DE 102007025551**

(43) Veröffentlichungstag der Anmeldung:
**03.02.2010 Patentblatt 2010/05**

(73) Patentinhaber: **Siemens Aktiengesellschaft 80333 München (DE)**

(72) Erfinder:
• **HAMMER, Thomas**
  **91334 Hemhofen (DE)**
• **MOST, Dieter**
  **91052 Erlangen (DE)**

(56) Entgegenhaltungen:
**WO-A-2005/103568     DE-A1- 10 345 890**
**DE-B- 1 254 364     US-A1- 2002 092 302**

**Beschreibung**

Die Erfindung bezieht sich auf ein Verfahren zur Verbrennung von kohlenwasserstoffhaltigen Brenngasen. Daneben bezieht sich die Erfindung auch auf die zugehörige Vorrichtung zur Durchführung des Verfahrens.

Der Betrieb von Gasturbinenbrennern erfordert aus Gründen der Verfügbarkeit und Wirtschaftlichkeit zunehmend die Verfeuerung von Brennstoffen unterschiedlicher Qualität, was sich im ungünstigsten Fall in Unterschieden im Brennwert niederschlagen kann, aber selbst bei gleichem Brennwert zu Unterschieden in der laminaren und turbulenten Flammengeschwindigkeit, in der Induktionszeit und in der Umsetzungsgeschwindigkeit führt. Das spezifische Design einer Brennkammer und eines Brennerkopfes für derartige Brenner erlaubt deshalb optimalen Betrieb mit hohem Wirkungsgrad und niedrigen Emissionen jeweils nur für einen genau spezifizierten Brennstoff. Ähnlich gilt, dass der Lastbereich, in dem ein Brenner stabil und e-missionsarm betrieben werden kann, weitgehend durch das jeweilige Design festgelegt ist.

Der Einsatz elektrischer Felder auf Verbrennugsvorgänge ist beispielsweise durch die WO 2006/067108 A1 bekannt. Hier wird vorgeschlagen, einen Brenner durch Anlegen elektrischer Felder zu steuern und so die Flexibilität bezüglich Lastbereich und Brennstoffqualität zu verbessern. Der Einsatz elektrischer Felder, die nicht zur Zündung und Unterhaltung eines elektrischen Gasentladungsplasmas ausreichen, erlaubt aber nur eine eingeschränkte Steuerung der Verbrennung, die auf der Nutzung der in der Flamme selbst erzeugten Ionen beruht.

Der Einsatz von Plasmen zur Induzierung einer Pyrolyse und partieller Oxidation ist aus der WO 2006/034983 A1 bekannt. Dabei wird vorgeschlagen, die Verbrennung durch Plasmen zu stabilisieren, die durch Hochfrequenzanregung im Brennraum erzeugt werden. Die Erzeugung von Plasmen im Brennraum eines Brenners mittels einer im Brennraum angeordneten Elektrode wird in WO 2003/081130 A1 vorgeschlagen. Die EP 1 512 913 A1 beschreibt die Behandlung von Brennstoff-Luft-Gemischen in der Zufuhr zum Brenner durch kalte Plasmen zur Steuerung der Verbrennung. In der US 5 640 841 A wird die Zündung eines Turbinenbrenners durch eine so genannte Plasmafackel ("plasma torch") beschrieben, wobei diese nicht nur zur Zündung sondern auch zur Stabilisierung der Verbrennung als Pilot betrieben werden kann. In der WO 2005/017410 A1 wird vorgeschlagen, den Brennstoff bei der Zufuhr zum Brenner mittels einer dielektrisch behinderten Entladung zu aktivieren und so die Verbrennung z. B. in den Brennern von Flugtriebwerken zu verbessern. Für den gleichen Zweck wird in der WO 2004/085694 A2 die Verbesserung der Verbrennung durch Behandlung eines Gasstromes mittels dielektrisch behinderter Entladungen beschrieben, wobei dieser Gasstrom entweder aus Brennstoff oder aus einem Gemisch von Brennstoff und einem für die Verbrennung einsetzbaren Oxidationsmittel, z. B. Luft, besteht.

Die vom Stand der Technik vorbekannten Verfahren haben für den Fall, dass das Gasentladungsplasma im Brennraum erzeugt wird, den entscheidenden Nachteil, dass dabei verstärkt schädliche Nebenprodukte gebildet werden, wie sie in kleineren Mengen auch bei der Verbrennung entstehen können. Beispiele dafür sind insbesondere die Bildung von Stickoxiden und Kohlenmonoxid im Falle der mageren Verbrennung sowie die Bildung von Ruß und Ammoniak im Falle der fetten Verbrennung. Wenn das Gasentladungsplasma in der Brennstoff-Zufuhr - bei der kein Sauerstoff vorliegt - betrieben wird, tritt als Produkte dieser Vorbehandlung Ruß auf, der in der Verbrennung häufig nicht vollständig umgesetzt werden kann und damit auch als schädliche Emission feigesetzt wird.

Bei Einsatz des Plasmas in bereits gemischten Brennstoff-Luft-Gemischen muss, um nicht schon eine Verbrennung in der Zuleitung zum Brennraum zu induzieren, der Brennstoff im Vergleich zu stöchiometrischer Verbrennung stark überdosiert werden. Die Produkte der Plasmabehandlung sind dann aber neben dem die Verbrennung fördernden Wasserstoff weiterhin Kohlenmonoxid, Ruß und Ammoniak. Kohlenmonoxid wird ebenso wie der Ruß in der Verbrennung nur langsam umgesetzt und kann damit bei nicht ausreichender Verweilzeit im Brenner die Schadstoffemission des Brenners erhöhen. Ammoniak hingegen wird dagegen alternativ bei magerer Verbrennung zu Stickoxid umgesetzt oder bei fetter Verbrennung nicht oder nur teilweise zu Lachgas ($N_2O$) oxidiert und trägt somit ebenfalls zur Emission von Schadstoffen bzw. Treibhausgasen bei.

Der Einsatz von Plasmen zur Induzierung einer Wasserdampfreformierung ist bekannt. In der FR 2 724 806 A1 wird die Dampfreformierung von Kohlenwasserstoffen und flüchtigen organischen Substanzen - induziert durch ein Gleitlichtbogen-Plasma ("gliding arc") - offenbart, die einen Teil der beschriebenen Probleme vermeidet: Die Dampfreformierung kann bei geeigneter Prozessführung die Bildung von Ruß einerseits und die Bildung von Stickoxiden andererseits vermeiden.

Nachteile der oben erwähnten Verfahren und Vorrichtungen zur Dampfreformierung mittels Plasmen für die Anwendung zur Verbrennungssteuerung liegen darin, dass für die Abreaktion der in einem Plasma hinreichend hoher Leistungsdichte bereitgestellten Radikale, d.h. chemisch aktive Moleküle oder Atome, und Ionen ein großes Reaktorvolumen erforderlich ist. Weiterhin werden Plasmen hoher Leistungsdichte in Gasen bei Drucken von einer Atmosphäre und darüber bisher nur durch Gasentladungen erzielt, die in direktem Elektrodenkontakt stehen, so dass elektrodengeführte Gasentladungen vorliegen.

Eine Erosion der Elektroden durch den sich dann unweigerlich bildenden Lichtbogen wird durch Maßnahmen verringert, die eine schnelle Bewegung des Lichtbogenplasmas einschließlich seiner Fußpunkte an den Elektroden erzwingen. Üblicherweise wird dies durch eine schnelle Gasströmung erreicht, wie es in FR 2 724 806 A1 beschrieben ist. Für den Fall, dass die Gasströmung nicht ausreicht, kann jedoch die lokal in die Elektroden eingekoppelte Leistung sehr hoch werden, was explosive Aufschmelzung und Verdampfung großer Mengen des Elektrodenmaterials nach sich zieht. Weiterhin wird nicht angegeben, wie die Dampfreformierung effizient mit Verbrennungsprozessen gekoppelt werden kann.

Schließlich offenbart DE 1 254 364 B ein Verfahren zur Verbrennung von Kohlenwasserstoff-haltigen Brennstoffen in einem Brenner, mit folgenden Maßnahmen:

- wenigstens ein Teil des Brennstoffes wird in der Zuleitung zu einem Brenner mit Wasserdampf und mit den übrigen Betriebsgasen des Brenners gemischt und einer Plasmabehandlung durch ein elektrisches Gasentladungsplasma unterzogen,
- das plasmabehandelte Brenngas-Dampf-Betriebsgase-Gemisch wird dem Brenner zugeführt und verbrannt,
- wobei die elektrische Gasentladung in einem kompakten Reaktor betrieben wird, der in kinetisch engem Kontakt zur Verbrennungsreaktion steht.

Von obigem Stand der Technik ausgehend ist es Aufgabe der Erfindung, ein verbessertes Verfahren für eine plasmagesteuerte Verbrennung für Gasturbinen anzugeben und eine zugehörige Vorrichtung zu schaffen.

Die Aufgabe ist erfindungsgemäß bezüglich des Verfahrens durch die Maßnahmen des Patentanspruches 1 gelöst. Eine zugehörige Vorrichtung ist Gegenstand des Patentanspruches 19. Vorteilhafte Weiterbildungen des Verfahrens und der zugehörigen Vorrichtungen ergeben sich aus den jeweils abhängigen Ansprüchen.

Gegenstand vorliegender Erfindung sind ein Verfahren und zugehörige Vorrichtungen, mit denen sich die Verbrennung von kohlenwasserstoffhaltigen Brenngasen stabilisieren lässt, ohne dass die oben geschilderten Probleme auftreten.

Zur Stabilisierung der Verbrennung wird wenigstens ein Teil des Brenngases in der Zuleitung zu einem Brenner kontrolliert mit Wasserdampf gemischt und der Behandlung durch ein elektrisches Gasentladungsplasma kontrolliert hoher Leistungsdichte (kurz Plasmabehandlung) in einem kompakten Reaktor unterzogen, der kinetisch in engem Kontakt zur Verbrennungsreaktion steht. In engem Kontakt bedeutet dabei eine Reaktionskinetik derart, dass das durch die Wechselwirkung mit dem Plasma angeregte und aufgeheizte Gas nicht in thermodynamischem Gleichgewicht steht.

Bei einer solchen Verfahrensführung werden chemische Reaktionen ausgelöst, die im Brenngas-Wasserdampf-Gemisch stabile und temporäre Produkte erzeugen. Durch unmittelbare Zumischung zu dem Brenner zugeführten Brenngas bzw. Gemisch aus Brenngas und Oxidationsmittel können die stabilen wie auch die temporären Produkte des Plasmaabgases für eine verbesserte Brennstoffumsetzung genutzt werden. Dadurch wird die Effizienz des Brenners gesteigert, die Stabilität der Verbrennung wird über einen weiteren Lastbereich als beim Stand der Technik gewährleistet, und die Schadstoffemissionen der Verbrennung werden reduziert.

Unter kontrollierter Mischung mit Wasserdampf wird bei der Erfindung verstanden, dass eine Regelung des Massenflusses vom Dampf bezogen auf den Massenfluss und Kohlenstoffgehalt des Brenngases erfolgt. Dabei kann die dem Gemisch durch das Plasma zugeführte spezifische Energie, d.h. Energie pro Menge des Brenngas-Dampf-Gemisches, eine Regelvariable sein, von der der eingestellte Massenfluss des Dampfes abhängt. Ein unterer Grenzwert für den Massenfluss des Dampfes wird dadurch festgelegt, dass eine auch bei Dampfreformierung mögliche Russbildung vermieden wird, während ein oberer Grenzwert gesetzt wird, um die Wechselwirkung des Plasmas mit Wasserdampf auf ein solches Maß zu begrenzen, das eine effiziente Umsetzung des Brenngases gewährleistet.

Unter kontrolliert hoher elektrischer Leistungsdichte wird bei der Erfindung verstanden, dass die dem Plasma zugeführte elektrische Leistung in Abhängigkeit von Massenflüssen so geregelt wird, dass zum einen chemisch aktive Radikale und Ionen in großer Anzahldichte erzeugt werden, die Reformierungsreaktionen einleiten, zum anderen eine Gasaufheizung erfolgt, die dafür sorgt, dass die durch Radikale und Ionen eingeleiteten Kettenreaktionen nicht zum Erliegen kommen (Kettenabbruch = "chain termination"), sondern sich vielmehr beschleunigt fortsetzen (Kettenfortsetzung = "chain propagation"). Gleichzeitig ist aus Gründen der energetischen Effizienz und der Lebensdauer des Reaktors die elektrische Leistungsdichte so niedrig zu halten, dass die Ausbildung eines so genannten thermischen Plasmas vermieden wird, in dem sich Temperaturen von typisch 5000 K bis 20000 K einstellen würden.

Unter reaktionskinetisch engem Kontakt zum Brenner wird verstanden, dass das durch die Wechselwirkung mit dem Plasma angeregte und aufgeheizte Gas auf dem Weg zur Flammenzone des Brenners keine Zeit hat ein thermodynamisches Gleichgewicht zu erreichen. Das bewirkt eine günstigere Ausnutzung der dem Plasma zugeführten elektrischen Leistung, weil durch die dann noch vorhandenen Radikale und reaktiven Zwischenprodukte die so genannte Induktionszone der Verbrennung (darunter versteht man die Zone, in der aufgrund von Kettenreaktionen Temperatur und Radikalendichte langsam anwachsen, bevor der Umsatz in der so genannten Flammenfront dann schlagartig erfolgt) deutlich stärker verkürzt werden kann, als wenn der thermodynamisch stabile Endzustand der Dampfreformierung mit hohen Wasserstoffkonzentrationen erreicht wird, bevor der Eintritt des Reformats in den Flammenbereich erfolgt.

Das Plasma hoher elektrischer Leistungsdichte kann erfindungsgemäß durch elektrodengeführte Gasentladungen erzeugt werden, bei denen zur Vermeidung des Umschlags in einen thermischen Lichtbogen eine Regelung der Betriebsspannung anhand der Plasma-Impedanz erfolgt. Bevorzugt werden allerdings elektrische Gasentladungen, die nicht im Kontakt mit Elektroden stehen.

Zur Erzielung hoher Leistungsdichten ist bei der Erfindung die Anregung der Plasmen mit hohen Frequenzen vorgesehen, die im Radiofrequenzbereich oder darüber, d.h. im Mikrowellenbereich, liegen, d.h. typischerweise ab 6,5 MHz bis in den GHz-Bereich hinein. Die Einkopplung kann wahlweise kapazitiv oder induktiv oder im Bereich der Mikrowellen durch Antennenstrukturen für elektromagnetische Wellen erfolgen.

Für einen kompakten Aufbau ist die kapazitive Einkopplung besonders vorteilhaft, die z. B. dadurch erreicht werden kann, dass eine ein elektrisches Feld erzeugende Elektrode mit einer dünnen Keramikschicht überzogen wird. Die Ausbildung eines thermischen Lichtbogens wird dadurch ähnlich wie in einer dielektrisch behinderten Entladung vermieden. Gleichzeitig wird bei Wahl einer hinreichend hohen Frequenz die Ausbildung eines Plasmas mit hoher Stromdichte und damit auch hoher Leistungsdichte ermöglicht, ohne dass dabei hohe elektrische Feldstärken in der Keramikschicht oder auch allgemein der dielektrischen Barriere auftreten, die zu deren Zerstörung führen könnten.

In einer besonders vorteilhaften Ausgestaltung der Erfindung sind alle das elektrische Feld erzeugenden Elektrodenstrukturen mit einer dielektrischen Barriere überzogen. Die Dicke der dielektrischen Barriere ist dabei so dünn wie möglich zu wählen, wobei Grenzen zum einen durch produktionstechnische Verfahren gesetzt sind, zum anderen durch die dielektrische Festigkeit des Materials. Dies sind die elektrische Feldstärke, bis zu der kein dielektrischer Durchbruch auftritt, und weiterhin die im Betrieb möglichen Potentialabfälle an der Barriere. Eine zuverlässige Herstellung solcher dünnen Schichten kann durch konventionelle Prozesse zur Erzeugung keramischer Strukturen, aber auch z. B. durch Plasmaspritzen oder Deposition aus der durch Plasmaverdampfung erzeugten Dampfphase erfolgen.

Die Regelung der Leistungsdichte erfolgt bei der Erfindung durch Variation der Frequenz, Variation der Amplitude, oder Taktung mit Variation des Puls-Pause Verhältnisses. Die genaue Ausgestaltung des Plasmareaktors kann den jeweiligen Gegebenheiten des Brenners und des umzusetzenden Brennstoffes angepasst werden. Im Folgenden werden exemplarisch Umsetzungsvarianten dargestellt.

Vorteilhafterweise kann das angegebene Verfahren auch bei Vorliegen synthesegashaltiger Brennstoffe ($CO$, $CO_2$, $H_2$-Gemische) eingesetzt werden.

Ebenso kann dem Wasserdampf in kleinen Mengen Sauerstoff zugesetzt werden, um den Energiebedarf der Reformierung durch exotherme Reaktionen des Sauerstoffs mit dem Brennstoff zu senken.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen.

Es zeigen jeweils in schematischer Darstellung

Figur 1    den Querschnitt durch einen Staukörper-Brenner mit Gleitlichtbogen-Plasmastabilisierung,

Figur 2    einen alternativen Aufbau der Vorrichtung gemäß Figur 1,

Figur 3    einen Ausschnitt aus einem Staukörper-Brenner gemäß Figur 1, bei dem zusätzlich Mittel für eine dielektrisch behinderte Entladung vorhanden sind,

Figur 4    einen zu Figur 3 entsprechender Ausschnitt aus Figur 2 und

Figur 5    einen Ausschnitt aus einer Vorrichtung gemäß Figur 1 mit zwei Drallerzeugern und

Figur 6    einen zu Figur 1 alternativen Aufbau mit einem Elektromagneten.

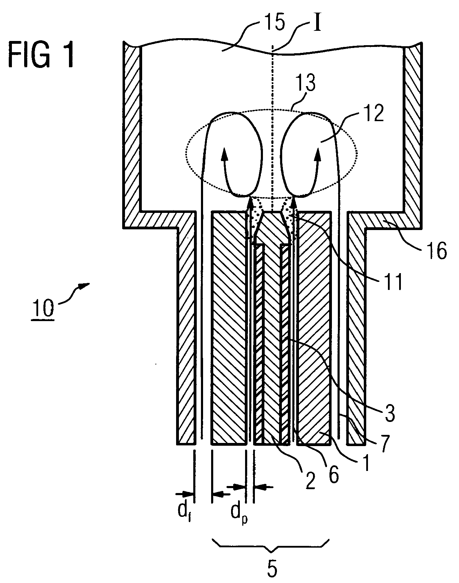

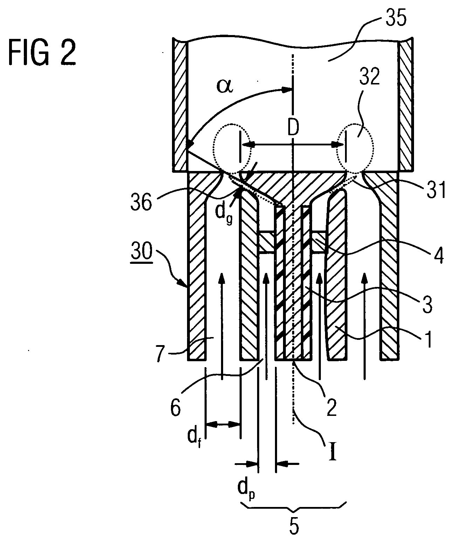

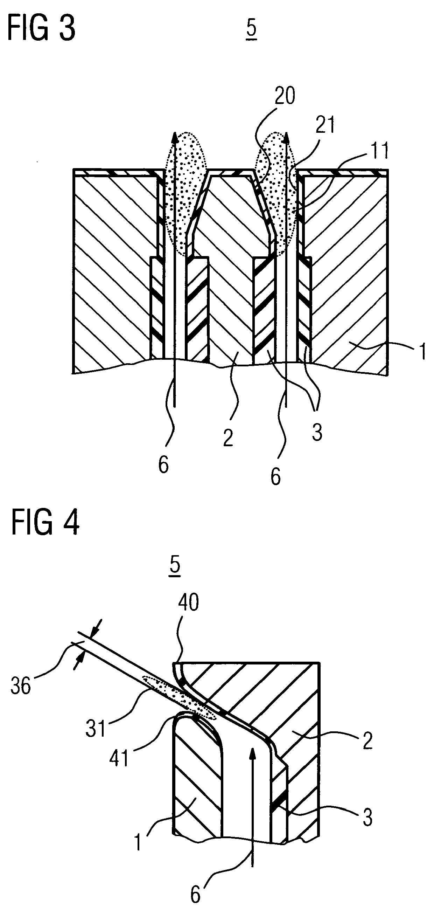

Die Figuren, insbesondere Figur 1 und 2 einerseits und Figuren 3 und 4 andererseits, werden nachfolgend teilweise gemeinsam beschrieben. Dabei werden für gleiche bzw. gleichwirkende Teile gleiche bzw. sich entsprechende Bezugszeichen verwendet.

Bei allen nachfolgend beschriebenen Brennern stellt jeweils Bezugszeichen 1 eine Masseelektrode, 2 eine Hochspannungs(HV)-Elektrode und 3 einen Isolator dar. Dabei ist die HV-Elektrode 2 jeweils zentrisch im Aufbau angeordnet und vom Isolator 3 umgeben, wobei außerhalb des Isolators 3 die Masseelektrode 1 angeordnet ist. Es sind jeweils Gasführungskanäle 6 und 7 und ggf. ein Drallerzeuger 4 vorhanden. In der inneren Leitung 6 wird ein Brenngas-Wasserdampf-Gemisch und in der äußeren Leitung 7 ein Brenngas-Luft-Gemisch geführt. Es ist so ein Plasmareaktor 5 in den Brenner integriert.

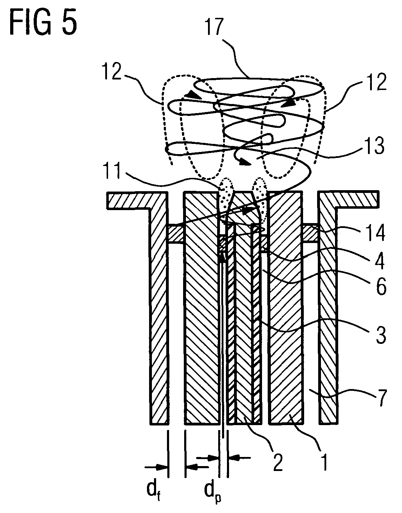

Von obigen Bezeichnungen abgesehen bedeuten in Figur 1 Bezugszeichen 10 das Gehäuse eines ersten plasmastabilisierten Staukörper-Brenners mit einer Brennkammer 15, in der eine Plasmazone 11, eine Rezirkulationszone 12 und eine Verbrennungszone 13 vorhanden ist. Dieser Aufbau ist auch in Figur 3 und Figur 5 vorhanden, wobei auf die Unterschiede zu Figur 1 weiter unten im Einzelnen eingegangen wird.

In der Figur 2 und Figur 4 sind in Abweichung zu Figur 1 und 3, die einen plasmastabilisierten Brenner darstellen, mit 30 die Gehäusewandung und mit 35 eine Brennkammer bezeichnet, wobei sich hier eine Plasmazone 31 und eine Verbrennungszone 32 ergeben. Innerhalb des Gehäuses ist weiterhin zusätzlich eine dielektrische Barriere 25 vorhanden.

Ansonsten sind die Elektroden und Kanäle entsprechend oben bereits allgemein ausgeführter Beschreibung ausgebildet. Die insbesondere ringförmig ausgebildeten Kanäle 6 und 7 haben eine Weite von $d_f$ bzw. dp, wobei im Allgemeinen gilt:

$$d_f > d_p$$

Statt des rotationssymmetrischen Aufbaus in den Figuren der Zeichnung können gegebenenfalls auch planare Anordnungen gebildet werden. Das Prinzip der Erfindung ändert sich dadurch nicht.

Figur 1 realisiert also als erstes Beispiel einen durch ein Gleitlichtbogen-Plasma stabilisierten Staukörper-Brenner. Für die effiziente Durchmischung der Nachreaktionszone des Plasmas mit dem mageren Brenngas-Luft-Gemisch sorgt hier das stumpfe Ende des Plasmareaktors, das ähnlich wie ein in die Strömung eingebrachter Staukörper bzw. eine eingebrachte Abbrisskante eine starke Rezirkulation der Verbrennungsgase bewirkt.

Zum Zwecke der stärkeren Lichtbogenbewegung kann in der Brenngas-Dampf-Zufuhr des Plasmareaktors 5 ein Drallerzeuger untergebracht sein, der die Translation des Lichtbogens in axialer Richtung eine Rotation in azimutaler Richtung überlagert. Darauf wird weiter unten anhand Figur 5 noch eingegangen.

Alternativ zu Letzterem ist es auch bekannt, dass Magnetfelder zur Förderung der Lichtbogenbewegung einsetzbar sind. Wenn man diesen Effekt nutzen will, muss das Magnetfeld parallel zur drallfreien Gasströmung und damit axial sein. Es können auch beide Maßnahmen gleichzeitig eingesetzt werden.

Zu beachten ist, dass das Plasma durch das strömende Brenngas-Dampf-Gemisch und die Formgebung der Elektroden in den Brennraum hineingetragen wird und somit ein inniger Kontakt des reaktiven Plasma-Abgases mit dem Brenngas-Luft-Gemisch erreicht wird. Dabei brennt das Plasma immer noch bevorzugt im Brenngas-Dampf-Gemisch, so dass die Bildung Stickstoffhaltiger Komponenten, die bei der nachfolgenden Verbrennung zu Stickoxidemissionen führen können, wirkungsvoll unterbunden ist.

Figur 2 realisiert dagegen als Alternativbeispiel zu Figur 1 einen solchen durch ein Gleitlichtbogen-Plasma stabilisierten Brenner 30, bei dem die effiziente Durchmischung der Nachreaktionszone des Plasmas mit dem mageren Brenngas-Luft-Gemisch dadurch erreicht wird, dass das Abgas des Plasmas unmittelbar vor dem Austritt in die Brennkammer 35 schräg in das magere Brenngas-Luft-Gemisch eingeströmt wird. Wesentlich ist dafür ein Gasentladungsspalt 36 mit Weite $d_g$, der in einen Winkel α zur Richtung der Gasführungskanäle 6, 7 steht. Am Austritt des Kanals 7 in die Brennkammer 35 werden dann im Abstand D Verbrennungszonen 32 gebildet, die bei rotationssymmetrischer Ausbildung des Brenners 30 einen Ring bilden.

In Figur 2 kann durch einen Drallerzeuger im Plasmareaktor eine azimutale Bewegung des Lichtbogens erzeugt werden, die genauso auch durch ein Magnetfeld erzwungen werden kann, das ungefähr parallel zur drallfreien Gasströmung verläuft und hier deshalb neben der axialen auch eine radiale Komponente benötigt. Auch hier kann das Plasma durch die Gasströmung und die Formgebung der Elektroden in den Brenngas-Luft-Kanal eingetragen werden. Dabei brennt das Plasma immer noch bevorzugt im Brenngas-Dampf-Gemisch, so dass die Bildung Stickstoffhaltiger Komponenten, die bei der nachfolgenden Verbrennung zu Stickoxidemissionen führen können, wirkungsvoll unterbunden ist.

Figur 3 verdeutlicht in einem Ausschnitt den Arbeitsbereich des durch ein Plasma stabilisierten Staukörper-Brenners gemäß Figur 1, wobei das Plasma allerdings aufgrund von dielektrischen Barrieren 20, 21 zwischen den Elektroden 1, 2 hier durch eine Wechselspannung anzuregen ist. Je nach deren Betriebsfrequenz wird eine eher leistungsschwache dielektrisch behinderte Entladung oder eine in der Leistung steigerbare kapazitiv gekoppelte Hochfrequenz-Entladung gebildet. Vorteilhaft gegenüber der Entladung nach Figur 1 ist die bessere Steuerbarkeit und die homogenere Verteilung des Plasmas 11, wobei die homogenere Verteilung eine gleichmäßige Behandlung des Brenngas-Dampf-Gemisches auch ohne Drallströmung erlaubt.

Figur 4 verdeutlicht in einem entsprechenden Ausschnitt wie Figur 3 aus dem Arbeitsbereich des durch ein Plasma stabilisierten Brenners gemäß Figur 2, wobei das Plasma wie in Figur 3 aufgrund von dielektrischen Barrieren 40, 41 zwischen den Elektroden 1, 2 wieder durch eine Wechselspannung anzuregen ist. Je nach deren Betriebsfrequenz wird eine eher leistungsschwache dielektrisch behinderte Entladung oder eine in der Leistung steigerbare kapazitiv gekoppelte Hochfrequenz-Entladung gebildet.

Als dielektrische Barriere ist in den Figuren 3 und 4 gegebenenfalls eine keramische Beschichtung alternativ einer der beiden Elektroden 1 oder 2 ausreichend.

Vorteilhaft ist bei der Anordnung gemäß Figur 4 gegenüber der Anordnung gemäß Figur 2 die bessere Steuerbarkeit und die homogenere Verteilung des Plasmas, die eine gleichmäßige Behandlung des Brenngas-Dampf-Gemisches auch ohne Drallströmung erlaubt.

In Figur 5 ist eine Vorrichtung im Wesentlichen entsprechend Figur 1 dargestellt, bei der sowohl in der Gasführungsleitung 5 für das Brenngas-Wasserdampf-Gemisch ein Drallerzeuger 4 als auch in der Gasführungsleitung für das magere Brenngas-Luft-Gemisch ein Drallerzeuger 14 vorhanden sind. Dabei dient der Drallerzeuger 4 der radialen Geschwindigkeitserhöhung des Plasma-Wasserdampf-Gemisches, während der weitere Drallerzeuger 14 in der Leitung 6 für die Brenngaszufuhr die Rezirkulation des Brenngases und damit die Durchmischung von Plasmaabgas und Brenngas in der Brennkammer 35 erhöhen kann. Gegebenenfalls ist in diesem Fall der Drallerzeuger 14 in der Brenngasleitung 6 bereits hinreichend. Wesentlich ist, dass ausgehend von der ringförmigen Rezirkulationszone 12 entsprechend Figur 1 eine Drallströmung mit zusätzlicher Rezirkulationszone mit Mittenbereich generiert wird, der durch die Wirbellinie 17 angedeutet ist. Damit kann der Wirkungsgrad der Verbrennung weiter verbessert werden.

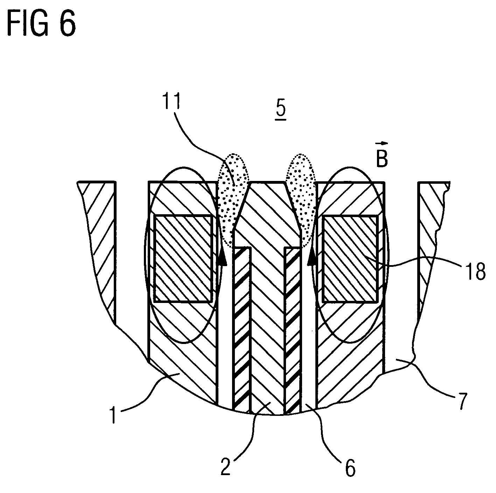

In Figur 6 ist ein Elektromagnet 18 vorgesehen, der ein Magnetfeld B erzeugt, das im Bereich des Gasentladungsspaltes des Plasmareaktors parallel zur Gasströmung und senkrecht zum Gasentladungsstrom verläuft. Dadurch wird eine Lorentz-Kraft auf das Gasentladungsplasma erzeugt, die senkrecht zur Gasströmung und zum Gasentladungsstrom steht und somit eine schnelle tangentiale Bewegung des Plasmas um die Reaktorachse I verursacht.

Der Elektromagnet ist vorzugsweise als Teil der Stromzufuhr des Gasentladungsplasmas ausgeführt. Dadurch ist gewährleistet, dass bei Umpolung des Gasentladungsstromes sich auch die Magnetfeldrichtung ändert, wodurch die Kraftrichtung erhalten bleibt.

## Patentansprüche

1. Verfahren zur Verbrennung von Kohlenwasserstoffhaltigen Brenngasen in einem Brenner, mit folgenden Maßnahmen:

   - wenigstens ein Teil des Brenngases wird in der Zuleitung zu einem Brenner kontrolliert mit Wasserdampf gemischt und einer Plasmabehandlung durch ein elektrisches Gasentladungsplasma unterzogen,
   - das plasmabehandelte Brenngas-Dampf-Gemisch wird dem Brenner zugeführt, dort mit den übrigen Betriebsgasen des Brenners gemischt und verbrannt,
   - wobei die elektrische Gasentladung in einem kompakten Reaktor betrieben wird, der in kinetisch engem Kontakt zur Verbrennungsreaktion steht, so dass das durch die Wechselwirkung mit dem Plasma angeregte und aufgeheizte Brenngas-Dampf-Gemisch nicht in thermodynamischem Gleichgewicht steht.

2. Verfahren nach Anspruch 1, wobei die Plasmabehandlung durch ein Gasentladungsplasma vorgegebener hoher Leistungsdichte erfolgt.

3. Verfahren nach Anspruch 1 oder Anspruch 2, wobei chemische Reaktionen ausgelöst werden, die im Brenngas-Wasserdampf-Gemisch stabile und temporäre Produkte erzeugen.

4. Verfahren nach Anspruch 3, wobei durch unmittelbare Zumischung zum dem Brenner zugeführten Brenngas bzw. einem Gemisch aus Brenngas und Oxidationsmittel die stabilen und die temporären Produkte des Plasmagases für eine verbesserte Brennstoffumsetzung eines mageren Brenngas-Luft-Gemisches genutzt werden.

5. Verfahren nach einem der vorhergehenden Ansprüche, wobei kontrollierte Mischung mit Wasserdampf durch eine Regelung des Massenflusses von Dampf bezogen auf den Massenstrom und den Kohlenstoffgehalt des Brenngases erfolgt.

6. Verfähren nach Anspruch 5, wobei die dem Gemisch durch das Plasma zugeführte spezifische Energie als Regelvariable, von der der eingestellte Massenfluss des Dampfes abhängt, verwendet wird.

7. Verfahren nach Anspruch 6, wobei ein unterer Grenzwert für den Massenfluss des Dampfes dadurch festgelegt wird, dass die auch bei der Dampfreformierung mögliche Russbildung vermieden wird, wogegen ein oberer Grenzwert gesetzt wird, um die Wechselwirkung des Plasmas mit Wasserdampf zu begrenzen, das eine effiziente Umsetzung des Brenngases gewährleistet.

8. Verfahren nach einem der vorhergehenden Ansprüche, wobei zur Gewährleistung einer kontrolliert hohen elektrischen Leistungsdichte die dem Plasma zugeführte elektrische Leistung in Abhängigkeit von Massenflüssen so geregelt wird, dass chemisch aktive Radikale und Ionen in großer Anzahl erzeugt werden, um die Reformierungsreaktionen einzuleiten und dass weiterhin eine Gasaufheizung erfolgt, die dafür sorgt, dass die durch Radikale und Ionen eingeleiteten Kettenreaktionen nicht zum Erliegen kommen, sondern sich beschleunigt fortsetzen.

9. Verfahren nach Anspruch 8, wobei die elektrische Leistungsdichte so niedrig und die Anströmgeschwindigkeit des Wasserdampf-Brenngas-Gemisches so hoch gehalten werden, dass die Ausbildung eines thermischen Plasmas vermieden wird.

10. Verfahren nach einem der vorhergehenden Ansprüche, wobei der Reaktionskinetisch enge Kontakt des Plasmas zum Brenner strömungstechnisch erreicht wird, wobei einerseits die Einstellung eines thermodynamischen Gleichgewichts im angeregten und aufgeheizten Gas unterbunden und anderseits die Durchmischung dieses Gases mit dem Brenngas-Luft-Gemisch gefördert wird.

11. Verfahren nach Anspruch 10, wobei die Induktionszone der Verbrennung gegenüber einem thermodynamisch stabilen Endzustand der Dampfreformierung verkürzt wird.

12. Verfahren nach einem der vorhergehenden Ansprüche, wobei das Plasma hoher elektrischer Leistungsdichte durch elektrodengeführte Gasentladungen erzeugt wird.

13. Verfahren nach Anspruch 12, wobei zur Vermeidung des Umschlags in einem thermischen Lichtbogen eine Regelung der Betriebsspannung anhand der Plasmaimpedanz erfolgt.

14. Verfahren nach Anspruch 10 oder Anspruch 11, wobei die elektrischen Gasentladungen keinen Kontakt zu den Elektroden haben.

15. Verfahren nach einem der Ansprüche 10 bis 12, wobei zur Erzielung hoher Leistungsdichten die Plasmen mit Frequenzen angeregt werden, die im Radiofrequenzbereich oder darüber liegen, insbesondere ab 6,5 MHz bis in den GHz-Bereich.

16. Verfahren nach Anspruch 15, wobei die Einkopplung entweder kapazitiv oder induktiv oder durch Antennenstrukturen für elektromagnetische Wellen erfolgt.

17. Verfahren nach Anspruch 1, wobei die Plasmabildung am Ende der Gaszuführung beim Austritt in die Brennkammer erfolgt.

18. Verfahren nach Anspruch 1, wobei die Plasmabildung in der Gaszuführung vor Austritt in die Brennkammer erfolgt.

19. Vorrichtung zur Durchführung des Verfahrens nach Anspruch 1 oder einem der Ansprüche 2 bis 18, mit einem Brenner (10) mit Gaszuführungsleitungen (7) für ein Brenngas-Luft-Gemisch und einer Brennkammer (15) zur Verbrennung des Brenngas-Luft-Gemisches, wobei im Brenner (10, 30) ein Plasmareaktor (5) zur Erzeugung eines reaktiven Plasmagases mit wenigstens einer Zuführung (6) für ein Brenngas-Wasserdampf-Gemisch und einer elektrischen Energieversorgung (1, 2) integriert ist und dass Mittel zur geeigneten Strömungsführung des Brenngas-Luft-Gemischs, des Brenngas-Wasserdampf-Gemisches und des reaktiven Plasmagases vorhanden sind.

20. Vorrichtung nach Anspruch 19, wobei die Mittel eine Durchmischung des reaktiven Plasmagases mit dem brennbaren Gasgemisch im Brennraum (15, 35) bewirken.

21. Vorrichtung nach Anspruch 19, wobei die Mittel wenigstens einen Wirbelerzeuger, wie Staukörper oder Abrisskanten, in der Strömung aufweisen.

22. Vorrichtung nach Anspruch 19, wobei die Mittel wenigstens einen Drallerzeuger (4, 14) für die Gasströmungen aufweisen.

23. Vorrichtung nach Anspruch 19, wobei die Mittel wenigstens einen Magneten (18) aufweisen.

24. Vorrichtung nach Anspruch 19, wobei die Mittel zur Durchmischung des reaktiven Plasmagases mit dem brennbaren Gasgemisch in der Brennkammer (15, 35) in unmittelbarer Nähe zum Gaseintritt in die Brennkammer (15, 35) ansetzen.

25. Vorrichtung nach Anspruch 24, wobei in den Brenner (10) ein Plasmareaktor (5) mit einem ausgedehnten Entladungsspalt (36) integriert ist, wobei der Entladungsspalt (36) nahe zum Eintritt des Brenngas-Luft-Gemisches in die Brennkammer (35) unter einem vorgegebenen Winkel ($\alpha$) in die das Brenngas-Luft-Gemisch zuführenden Leitung (5, 6) einmündet und damit eine effiziente Durchmischung der Nachreaktionszone des Plasmas (31) mit dem mageren Brenngas-Luft-Gemisch gewährleistet.

26. Vorrichtung nach Anspruch 19, wobei die Mittel zur Strömungsführung im Plasmareaktor die Ausbildung eines nichtthermischen, sich relativ zur Strömung schnell bewegenden Plasmas bewirken.

27. Vorrichtung nach Anspruch 26, wobei in der Brenngas-Dampf-Zufuhr (6) des Plasmareaktors (5) ein erster Drallerzeuger (4) angeordnet ist, der die Translation des elektrischen Gasentladungsplasmas längs der Strömung des Plasmagases eine Rotation in azimutaler Richtung überlagert.

28. Vorrichtung nach Anspruch 26, wobei ein Elektromagnet zur Erzeugung eines Magnetfeldes verwendet wird, das parallel zur drallfreien Gasströmung und senkrecht zum Gasentladungsstrom verläuft.

29. Vorrichtung nach Anspruch 26, wobei Mittel zur Erzeugung von dielektrisch behinderten Entladungen vorgesehen sind.

30. Vorrichtung nach Anspruch 29, wobei zur Erzeugung von dielektrisch behinderten Entladungen dielektrische Barrieren (20, 21', 40, 41) zwischen den Elektroden (1, 2) angeordnet sind, die durch eine Wechselspannung angeregt werden.

31. Vorrichtung nach Anspruch 30, wobei die Stärke der dielektrischen Barriere (20, 40) möglichst dünn ist, wobei die dielektrische Festigkeit des Materials gewährleistet sein muss.

32. Vorrichtung nach Anspruch 19, wobei ein Magnetfelderzeuger (18) zur Beaufschlagung des Plasmas mit einem Magnetfeld vorgebbarer Richtung und Stärke (B) vorhanden ist.

**Claims**

1. Method for the combustion of hydrocarbon-containing fuel gases, in a burner, with the following measures:

    - at least part of the fuel gas is mixed in the supply line to a burner in a controlled way with steam and is subjected to plasma treatment by means of an electrical gas discharge plasma,
    - the plasma-treated fuel-gas/steam mixture is supplied to the burner, is mixed there with the remaining operating gases of the burner and is burnt, and
    - the electrical gas discharge being operated in a compact reactor which is in kinetically close contact with the combustion reaction such that the fuel-gas/steam mixture excited and heated by the interaction with the plasma is not in a thermodynamic equilibrium.

2. Method according to Claim 1, wherein the plasma treatment takes place by means of a gas discharge plasma of stipulated high power density.

3. Method according to Claim 1 or Claim 2, wherein chemical reactions are triggered which generate stable and temporary products in the fuel-gas/steam mixture.

4. Method according to Claim 3, wherein, by being admixed directly to the fuel gas supplied to the burner or to a mixture of fuel gas and oxidant, the stable and the temporary products of the plasma gas are utilized for an improved fuel conversion of a lean fuel-gas/air mixture.

5. Method according to one of the preceding claims, wherein the controlled mixing with steam is carried out by regulating the mass flow of steam with respect to the mass flow and carbon content of the fuel gas.

6. Method according to Claim 5, wherein the specific energy supplied to the mixture by the plasma is used as a control variable on which the set mass flow of the steam depends.

7. Method according to Claim 6, wherein a lower limit value for the mass flow of the steam is fixed in that the soot formation, which is possible even during steam reforming, is avoided, whereas an upper limit value is set in order to limit the interaction of the plasma with steam which ensures the efficient conversion of the fuel gas.

8. Method according to one of the preceding claims, wherein, to ensure a controlled high electrical power density, the electrical power supplied to the plasma is regulated as a function of mass flows such that chemically active radicals and ions are generated in large numbers in order to initiate the reforming reactions, and such that, furthermore, gas heating takes place which ensures that the chain reactions initiated by radicals and ions will not come to a standstill, but, instead, continue in an accelerated way.

9. Method according to Claim 8, wherein the electrical power density is kept so low and the inflow velocity of the steam/fuel-gas mixture kept so high that the formation of a thermal plasma is avoided.

10. Method according to one of the preceding claims, wherein the reaction-kinetically close contact of the plasma with the burner is achieved in flow terms, on the one hand the setting of a thermodynamic equilibrium in the excited and heated gas being prevented and, on the other hand, the full mixing of this gas with the fuel-gas/air mixture being promoted.

11. Method according to Claim 10, wherein the combustion induction zone is shortened, as compared with a thermodynamically stable final state of steam reforming.

12. Method according to one of the preceding claims, wherein the plasma of high electrical power density is generated by means of electrode-guided gas discharges.

13. Method according to Claim 12, wherein, to avoid the transition to a thermal arc, a regulation of the operating voltage is carried out by means of the plasma impedance.

14. Method according to Claim 10 or Claim 11, wherein the electrical gas discharges have no contact with the electrodes.

15. Method according to one of Claims 10 to 12, wherein, to achieve high power densities, the plasmas are excited by means of frequencies which lie in the radio frequency range or above, in particular from 6.5 MHz into the GHz range.

16. Method according to Claim 15, wherein the infeed takes place either capacitively or inductively or by means of antenna structures for electromagnetic waves.

17. Method according to Claim 1, wherein plasma formation takes place at the end of the gas supply upon outlet into the combustion chamber.

18. Method according to Claim 1, wherein plasma formation takes place in the gas supply before outlet into the combustion chamber.

**19.** Device for carrying out the method according to Claim 1 or one of Claims 2 to 18, with a burner (10) with gas supply lines (7) for a fuel-gas/air mixture and a combustion chamber (15) for the combustion of the fuel-gas/air mixture, wherein a plasma reactor (5) for generating a reactive plasma gas, with at least one supply (6) for a fuel-gas/steam mixture and with an electrical power supply (1, 2), is integrated in the burner (10, 30), and in that means for the suitable flow routing of the fuel-gas/air mixture, and the fuel-gas/steam mixture and of the reactive plasma gas are present.

**20.** Device according to Claim 19, wherein the means cause a full mixing of the reactive plasma gas with the combustible gas mixture in the combustion space (15, 35).

**21.** Device according to Claim 19, wherein the means have at least one vortex generator, such as packings or breakaway edges, in the flow.

**22.** Device according to Claim 19, wherein the means have at least one swirl generator (4, 14) for the gas flows.

**23.** Device according to Claim 19, wherein the means have at least one magnet (18).

**24.** Device according to Claim 19, wherein the means for the full mixing of the reactive plasma gas with the combustible gas mixture in the combustion chamber (15, 35) start in the immediate vicinity of the gas inlet into the combustion chamber (15, 35).

**25.** Device according to Claim 24, wherein a plasma reactor (5) with an extended discharge gap (36) is integrated into the burner (10), the discharge gap (36) issuing into the combustion chamber (35), near the inlet of the fuel-gas/air mixture, at a stipulated angle (α) into the lines (5, 6) supplying the fuel-gas/air mixture, and consequently ensuring an efficient full mixing of the post-reaction zone of the plasma (31) with the lean fuel-gas/air mixture.

**26.** Device according to Claim 19, wherein the means for flow routing in the plasma reactor cause the formation of a non-thermal plasma moving quickly in relation to the flow.

**27.** Device according to Claim 26, wherein, in the fuel-gas/steam supply (6) of the plasma reactor (5), a first swirl generator (4) is arranged, which superposes a rotation in the azimuthal direction upon the translation of the electrical gas discharge plasma along the flow of the plasma gas.

**28.** Device according to Claim 26, wherein an electromagnet is used for generating a magnetic field which runs parallel to the swirl-free gas flow and perpendicularly to the gas discharge current.

**29.** Device according to Claim 26, wherein means for generating dielectrically impeded discharges are provided.

**30.** Device according to Claim 29, wherein, to generate dielectrically impeded discharges, dielectric barriers (20, 21', 40, 41) which are excited by an alternating voltage are arranged between the electrodes (1, 2).

**31.** Device according to Claim 30, wherein the thickness of the dielectric barrier (20, 40) is as thin as possible, the dielectric strength of the material having to be ensured.

**32.** Device according to Claim 19, wherein a magnetic field generator (18) for acting upon the plasma with a magnetic field of stipulatable direction and strength (B) is present.

**Revendications**

**1.** Procédé de combustion de gaz combustibles hydrocarbonés dans un brûleur, ayant les mesures suivantes :

- on mélange à de la vapeur d'eau de manière réglée au moins une partie du gaz combustible dans le conduit menant à un brûleur et on la soumet à un traitement au plasma par un plasma électrique à décharge dans un gaz,
- on envoie au brûleur le mélange de gaz combustible-vapeur traité au plasma, on l'y mélange et on l'y brûle avec les autres gaz de fonctionnement du brûleur,
- dans lequel on effectue la décharge électrique dans un gaz, dans un réacteur compact, qui est en contact étroit cinétiquement avec la réaction de combustion, de manière à ce que le mélange de gaz combustible-vapeur, excité par l'interaction avec le plasma et chauffé, ne soit pas en équilibre thermodynamique.

**2.** Procédé suivant la revendication 1, **caractérisé en ce qu'**on effectue le traitement au plasma par un plasma à décharge dans un gaz de grande densité de puissance donnée à l'avance.

**3.** Procédé suivant la revendication 1 ou revendication 2, dans lequel on déclenche des réactions chimiques, qui produisent des produits stables et temporaires dans le mélange de gaz combustible-vapeur d'eau.

4. Procédé suivant la revendication 3, dans lequel, en ajoutant directement au gaz combustible ou à un mélange de gaz combustible et d'agent oxydant envoyé au brûleur, des produits stables et des produits temporaires du gaz au plasma on profite d'une transformation meilleure du combustible d'un mélange maigre de gaz combustible-air.

5. Procédé suivant l'une des revendications précédentes, dans lequel on effectue le mélange réglé à de la vapeur d'eau en réglant le débit massique de vapeur par rapport au courant massique et à la teneur en carbone du gaz combustible.

6. Procédé suivant la revendication 5, dans lequel on utilise l'énergie spécifique apportée au mélange par le plasma comme variable de réglage, dont dépend le débit massique réglé de la vapeur.

7. Procédé suivant la revendication 6, dans lequel on fixe une valeur limite inférieure du débit massique de la vapeur, en empêchant également une formation éventuelle de suie lors du reformage de la vapeur, tandis que l'on fixe une valeur limite supérieure pour limiter l'interaction du plasma avec de la vapeur d'eau, ce qui assure une transformation efficace du gaz combustible.

8. Procédé suivant l'une des revendications précédentes, dans lequel, pour garantir une grande densité de puissance électrique réglée, on régule la puissance électrique apportée au plasma en fonction de débits massiques de manière à produire en grand nombre des radicaux et des ions actifs chimiquement, afin d'amorcer les réactions de reformage et en ce que l'on effectue en outre un chauffage du gaz, qui sert à ce que les réactions en chaîne, amorcées par des radicaux et des ions, ne s'arrêtent pas, mais au contraire se poursuivent de façon accélérée.

9. Procédé suivant la revendication 8, dans lequel, on maintien si basse la densité de puissance électrique et si grande la vitesse d'afflux du mélange de vapeur d'eau-gaz combustible que l'on empêche la formation d'un plasma thermique.

10. Procédé suivant l'une des revendications précédentes, dans lequel, on obtient, en technique des fluides, le contact étroit en cinétique de réaction du plasma avec le brûleur, d'une part en supprimant l'établissement d'un équilibre thermodynamique dans le gaz excité et chauffé et, d'autre part, en favorisant le mélange de ce gaz avec le mélange de gaz combustible-air.

11. Procédé suivant la revendication 10, dans lequel on raccourcit la zone d'induction de la combustion par rapport à un état final stable thermodynamique du reformage à la vapeur.

12. Procédé suivant l'une des revendications précédentes, **caractérisé en ce qu'**on produit le plasma de grande densité de puissance électrique par des décharges dans un gaz effectuées par des électrodes.

13. Procédé suivant la revendication 12, dans lequel, pour empêcher la transition en un arc électrique, on effectue une régulation de la tension de fonctionnement au moyen de l'impédance du plasma.

14. Procédé suivant la revendication 10 ou la revendication 11, **caractérisé en ce que** les décharges électriques dans un gaz n'ont pas de contact avec les électrodes.

15. Procédé suivant l'une des revendications 10 à 12, dans lequel, pour obtenir de grandes densités de puissance, on excite les plasmas à des fréquences qui sont dans la plage des fréquences radioélectriques ou supérieures, en allant notamment de 6,5 MHz au domaine du GHz.

16. Procédé suivant la revendication 15, **caractérisé en ce qu'**on effectue le couplage capacitivement ou inductivement ou par des structures d'antenne pour des ondes électromagnétiques.

17. Procédé suivant la revendication 1, **caractérisé en ce qu'**on effectue la formation du plasma à la fin de l'arrivée du gaz à la sortie dans la chambre de combustion.

18. Procédé suivant la revendication 1, dans lequel on effectue la formation du plasma dans l'arrivée du gaz avant la sortie dans la chambre de combustion.

19. Dispositif pour effectuer le procédé suivant la revendication 1 ou l'une des revendications 2 à 18, comprenant un brûleur ( 10 ) ayant des conduits ( 7 ) d'apport de gaz pour un mélange de gaz combustible-air et une chambre ( 15 ) de combustion pour la combustion du mélange de gaz combustible-air, dans lequel il est intégré au brûleur ( 10, 30 ) un réacteur ( 5 ) à plasma de production d'un gaz de plasma réactif, ayant au moins une arrivée ( 6 ) pour un mélange de gaz combustible-vapeur d'eau et une alimentation ( 1, 2 ) en énergie électrique et en ce qu'il y a des moyens de conduite appropriés du courant du mélange de gaz combustible-air, du mélange de gaz combustible-vapeur d'eau et du gaz de plasma réactif.

20. Dispositif suivant la revendication 19, dans lequel les moyens provoquent un mélange du gaz de plasma réactif au mélange gazeux combustible dans la chambre de combustion ( 15, 35 ).

**21.** Procédé suivant la revendication 19, dans lequel les moyens ont, dans l'écoulement, au moins un producteur de tourbillons comme des chicanes ou des arêtes de décollement.

**22.** Procédé suivant la revendication 19, **caractérisé en ce que** les moyens ont au moins un producteur ( 4, 14 ) de tourbillons pour les courants gazeux.

**23.** Procédé suivant la revendication 19, dans lequel les moyens ont au moins un aimant ( 18 ).

**24.** Procédé suivant la revendication 19, dans lequel les moyens de mélange du gaz de plasma réactif au mélange gazeux combustible dans la chambre de combustion ( 15, 35 ) sont mis à proximité immédiate de l'entrée du gaz dans la chambre de combustion ( 15, 35 ).

**25.** Procédé suivant la revendication 24, dans lequel il est intégré au brûleur ( 10 ) un réacteur ( 5 ) à plasma ayant une fente ( 36 ) de décharge étendue, la fente ( 36 ) de décharge débouchant dans le conduit ( 5, 6 ) apportant le mélange de gaz combustible-air sous un angle ( $\alpha$ ) donné à l'avance à proximité de l'entrée du mélange de gaz combustible-air dans la chambre ( 35 ) de combustion et un mélange efficace de la zone de post-réaction du plasma ( 31 ) au mélange maigre de gaz combustible-air étant ainsi assuré.

**26.** Procédé suivant la revendication 19, dans lequel les moyens de conduite du courant dans le réacteur à plasma provoque la formation d'un plasma non thermique se déplaçant rapidement par rapport au courant.

**27.** Procédé suivant la revendication 26, dans lequel, dans le conduit ( 6 ) d'apport du gaz combustible-vapeur du réacteur ( 5 ) à plasma est disposé un premier producteur ( 4 ) de tourbillons, qui superpose une rotation dans une direction azimutale à la translation du plasma à décharge électrique dans un gaz le long du courant du gaz de plasma.

**28.** Procédé suivant la revendication 26, dans lequel un électroaimant est utilisé pour produire un champ magnétique qui s'étend parallèlement au courant de gaz sans tourbillon et perpendiculairement au courant à décharge dans un gaz.

**29.** Procédé suivant la revendication 26, dans lequel il est prévu des moyens de production de décharges rendues incomplètes par voie diélectrique.

**30.** Procédé suivant la revendication 29, dans lequel, pour la production de décharges rendues incomplètes par voie diélectrique, il est disposé des barrières ( 20, 21', 40, 41 ) diélectriques entre les électrodes ( 1, 2 ), qui sont excitées par une tension alternative.

**31.** Procédé suivant la revendication 30, dans lequel l'épaisseur des barrières ( 20, 40 ) diélectriques est aussi petite que possible, la rigidité diélectrique du matériau devant être assurée.

**32.** Dispositif suivant la revendication 19, dans lequel il y a un producteur ( 18 ) de champ magnétique pour alimenter le plasma en un champ magnétique de direction et d'intensité ( B ) pouvant être données à l'avance.

FIG 1

FIG 2

FIG 3

<u>5</u>

FIG 4

<u>5</u>

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006067108 A1
- WO 2006034983 A1
- WO 2003081130 A1
- EP 1512913 A1
- US 5640841 A
- WO 2005017410 A1
- WO 2004085694 A2
- FR 2724806 A1
- DE 1254364 B